# EUROPÄISCHE PATENTSCHRIFT

(11) **EP 1 404 992 B1**
(45) Veröffentlichungstag und Bekanntmachung des Hinweises auf die Patenterteilung: **05.03.2008**
(21) Anmeldenummer: 02748703.2
(22) Anmeldetag: 14.05.2002
(51) Int. Cl.: F16H 61/662, F16H 47/04, F16H 37/08

(54) **MEHRBEREICHSGETRIEBE FÜR EIN KRAFTFAHRZEUG**
AUXILIARY-RANGE TRANSMISSION FOR A MOTOR VEHICLE
TRANSMISSION A PLUSIEURS ETAGES POUR UN VEHICULE A MOTEUR

(30) Priorität: 18.05.2001 DE 10124352
(43) Veröffentlichungstag der Anmeldung: 07.04.2004
(73) Patentinhaber: ZF FRIEDRICHSHAFEN Aktiengesellschaft, 88038 Friedrichshafen (DE)
(72) Erfinder: DREIBHOLZ, Ralf, 88074 Meckenbeuren (DE)
(86) Internationale Anmeldenummer: PCT/EP2002/005258
(87) Internationale Veröffentlichungsnummer: WO 2002/095267

(56) Entgegenhaltungen:
- EP-A- 0 507 329
- EP-A- 0 899 484
- WO-A-02/057107
- DE-A- 3 926 717
- DE-A- 19 542 993
- US-A- 5 624 339
- PATENT ABSTRACTS OF JAPAN vol. 2000, no. 16, 8. Mai 2001 (2001-05-08) -& JP 2001 021027 A (NISSAN MOTOR CO LTD), 26. Januar 2001 (2001-01-26)

## Beschreibung

Die Erfindung betrifft ein Mehrbereichsgetriebe für ein Kraftfahrzeug nach der im Oberbegriff des Patentanspruches 1 näher definierten Art.

Mehrbereichsgetriebe mit der Möglichkeit einer Leistungsverzweigung, welche in einem Leistungsstrang ein stufenloses Getriebe enthalten, können zu einer spürbaren Verbesserung des Wirkungsgrades eines stufenlosen Getriebes beitragen und einen größeren Übersetzungsbereich ermöglichen.

Ein solches Mehrbereichsgetriebe ist z.B. aus der deutschen Patentschrift DE 39 03 877 C1 bekannt, worin ein Getriebe beschrieben wird, welches aus einem vierwelligen Zahnräder-Planetengetriebe und einem dazu parallel angeordneten stufenlos einstellbaren hydrostatischen Getriebe sowie aus weiteren Zahnrädern besteht, wobei Schalt-Zahnkupplungen mehrere Gänge realisieren, in denen jeweils das hydrostatische Getriebe eine stufenlose Verstellung der stufenlosen Übersetzung des gesamten Getriebes bewirkt. Dabei erfolgt der Gangwechsel bei synchroner Drehzahl des zuschaltenden Schaltelements ohne Zugkraftunterbrechung und mit einer Leistungsumkehr im stufenlosen Teil.

Im Synchronpunkt wird eine Übersetzungskorrektur benötigt, wobei die Übersetzung des stufenlosen Getriebeteiles von dessen Ansteuerung korrigiert wird und der Variator soweit verstellt wird, bis der Synchronpunkt des zuschaltenden Schaltelementes erreicht ist. Nach dem Einrasten des neuen Schaltelementes wird eine Momentübertragung bewirkt, indem die Übersetzung um einen Faktor der Differenz zwischen Soll- und Ist-Wert geändert wird.

Diese Übersetzungskorrektur im Synchronpunkt ist jedoch nachteilhafterweise sehr ungenau. So ist nicht sichergestellt, daß das abschaltende formschlüssige Schaltelement nach der Umschaltung völlig entlastet ist. Neben diesem Umstand trägt weiterhin zu einer schlechten Schaltqualität bei, daß beim Lösen der Verbindung von formschlüssigen Schaltelementen unter Last eine sprungartige Momentänderung am Abtrieb auftritt.

Aus der Praxis sind des weiteren Versuche bekannt, Bereichswechsel bei hohen Dynamikanforderungen mit Hilfe reibschlüssiger Kupplungen fehlertoleranter zu gestalten. Dabei wird zu einer als Lastschaltung durchgeführten Bereichsumschaltung die Lastumverlagerung an den Schaltelementen vor Erreichen des Synchronpunktes der zuschaltenden Kupplung eingeleitet. Bei dieser Bereichswechselstrategie möchte man den Effekt nutzen, daß bei einer schlupfenden Kupplung deren Moment das Moment im Triebsstrang bestimmt, so daß eine Übersetzungsumkehr im Variator nicht spürbar ist.

Die Entlastung eines ersten Stranges bei einer bestimmten Differenzdrehzahl an dem zuschaltenden Schaltelement hat jedoch aufgrund der unterschiedlichen Übersetzung in den beteiligten Strängen einen Momentensprung am Abtrieb zur Folge, durch den der Schaltkomfort bei der Bereichsumschaltung leidet. Aus der DE-A1-3926717 ist ein Mehrbereichsgetriebe mit den Merkmalen des Oberbegriffes des Anspruches 1 bekannt.

Es ist Aufgabe der vorliegenden Erfindung, ein Mehrbereichsgetriebe für ein Kraftfahrzeug bereitzustellen, bei dem der Schaltkomfort der Bereichsumschaltung optimiert wird, während die Belastung der beteiligten Schaltelemente minimiert ist und der Verstellbereich des stufenlosen Getriebes weitestgehend ausgenützt wird.

Erfindungsgemäß wird diese Aufgabe mit einem Mehrbereichsgetriebe gemäß den Merkmalen des Patentanspruches 1 gelöst.

Bei dem Mehrbereichsgetriebe nach der Erfindung, bei dem bei einem Bereichswechsel eine Lastumverlagerung an wenigstens einem reibschlüssig ausgebildeten Schaltelement durch eine gleichzeitig zur Umschaltung der Schaltelemente durchgeführte Verstellung der Übersetzung des stufenlosen Getriebes erfolgt, kann die Lastumverteilung an den beteiligten Schaltelementen so vorgenommen werden, daß zum richtigen Zeitpunkt das abschaltende Schaltelement entlastet wird, während das zuschaltende Schaltelement so belastet wird, daß am Abtrieb ein möglichst kontinuierlicher Übergang des Getriebeausgangsmomentes herrscht.

Auf diese Weise ermöglicht das Mehrbereichsgetriebe nach der Erfindung einen ruckfreien Bereichswechsel und somit einen hohen Schaltkomfort bei der Bereichsumschaltung.

Ein besonders hoher Schaltkomfort ergibt sich dabei, wenn die gleichzeitig zur Verstellung des stufenlosen Getriebes erfolgende Lastumverlagerung an den Schaltelementen im Synchronpunkt erfolgt.

Von großer Bedeutung für den Schaltkomfort ist auch die erfindungsgemäß vorgesehene Ausgestaltung wenigstens eines der beteiligten Schaltelemente als reibschlüssiges Schaltelement. Wenngleich eines der beteiligten Schaltelemente auch formschlüssig ausgebildet sein kann, so ist doch besonders vorteilhaft, wenn sämtliche beteiligten Schaltelemente reibschlüssig sind.

Die Verstellung der Übersetzung des stufenlosen Getriebes erfolgt während der Umschaltung der Schaltelemente in Abhängigkeit der Eigenschaften seines Variators derart, daß das zuschaltende Schaltelement im Synchronpunkt eine zuvor berechnete Belastung erfährt, während das abschaltende Schaltelement entlastet ist.

Mit der Berücksichtigung der spezifischen Eigenschaften des Variators des stufenlosen Getriebes wird die Genauigkeit der Lastumverlagerung an den beteiligten Schaltelementen mittels Variatorverstellung erhöht, und der Schaltkomfort wird damit weiter verbessert.

Wenn die Verstellung der Übersetzung des stufenlosen Getriebes derart erfolgt, daß das aktuelle Belastungsmoment des Variators zu einem berechneten Zielpunkt im neuen Fahrbereich verändert wird, während gleichzeitig eine Lastübernahme bei den beteiligten Schaltelementen stattfindet, das heißt z. B., daß das abschaltende Schaltelement im übertragbaren Moment auf Null gefahren wird und das zuschaltende Schaltelement auf das zu übertragende Zielmoment gefahren wird, wird neben der Erzielung eines kontinuierlichen Überganges des Getriebeausgangsmomentes am Abtrieb auch ein Verlassen eines erlaubten Variatorübersetzungsbereiches, wie z.B. das Fahren in Anschläge bzw. das Erzeugen eines übermäßigen Schlupfes, zuverlässig verhindert.

Zur Ermittlung der Eigenschaften des Variators kann die in Abhängigkeit einer bestimmten Variatorverstellung erzielte Übertragungsfähigkeit der Schaltelemente eine empirische Größe darstellen. Die Größe der Verstellung des Variators ist von dessen Eigenschaften abhängig. Um diese Eigenschaften zu ermitteln, kann ausgehend von einem unbelasteten Zustand, in dem die Soll-Übersetzung der Ist-Übersetzung entspricht und kein Moment durch den Variator übertragen wird, die Übertragungsfähigkeit durch die Verstellung des Variators in eine bestimmte Richtung hergestellt werden, wobei das dabei übertragene Moment empirisch durch Messungen ermittelbar ist. Auf diese Weise lassen sich die Eigenschaften des Variators zuverlässig ermitteln, und somit auch die bei der Bereichsumschaltung erforderliche Variatorverstellung.

Weitere Vorteile und vorteilhafte Ausgestaltungen des Mehrbereichsgetriebes nach der Erfindung ergeben sich aus der nachfolgenden Beschreibung, der Zeichnung und den Patentansprüchen.

Ein Ausführungsbeispiel eines erfindungsgemäßen Mehrbereichsgetriebes ist in der Zeichnung dargestellt und wird im Folgenden näher erläutert.

Es zeigt:
- Fig.1: eine Prinzipskizze eines Mehrbereichsgetriebes mit einem stufenlosen Getriebe;
- Fig.2: ein die Übersetzung, Drehzahlen und Momente wiedergebendes Modell des stufenlosen Getriebes nach Fig. 1; und
- Fig.3: ein Diagramm mit Druck- und Übersetzungsverläufen während einer Bereichsumschaltung.

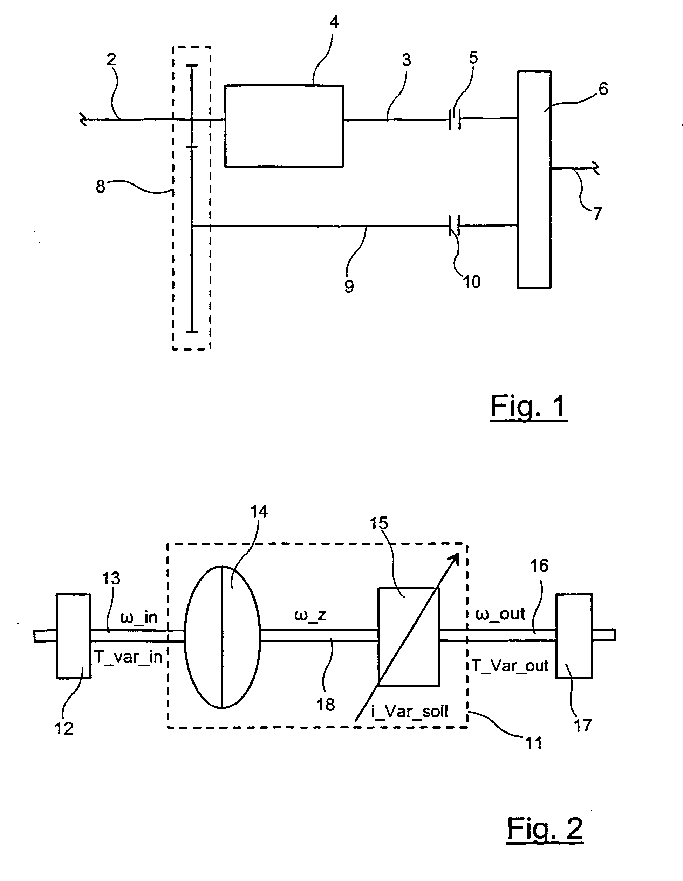

In Fig. 1 ist äußerst schematisiert eine Prinzipskizze eines Mehrbereichsgetriebes 1 für ein Kraftfahrzeug, vorzugsweise einen Personenkraftwagen, dargestellt, bei dem von einer Antriebswelle 2, die mit einem hier nicht ersichtlichen Antriebsmotor verbunden ist, ein erster Getriebestrang 3 mit einem stufenlosen Getriebe 4 zu einem eine Leistungssummierungsstufe 6 dastellenden Umlaufgetriebe, welches vorliegend als dreiwelliges Zahnräder-Planetengetriebe ausgebildet ist, führt. In alternativen Ausführungen kann die Leistungssummierungsstufe 6 selbstverständlich auch durch andere Getriebetypen realisiert sein.

Das stufenlose Getriebe 4 stellt im vorliegenden Fall ein CVT-Getriebe dar, jedoch kann es sich in alternativen Ausführungen auch um andere stufenlose Getriebetypen mit einem Variator handeln, wie z.B. um ein Reibradgetriebe oder ein hydrostatisches Getriebe.

Das stufenlose Getriebe 4 ist über ein reibschlüssiges Schaltelement 5 in Form einer Reibkupplung mit dem Umlaufgetriebe 6 verbindbar, welches über eine Abtriebswelle 7 mit einem Abtrieb verbunden ist.

Der Leistungsfluß führt somit in einem Bereich von der Antriebswelle 2 über den ersten Getriebestrang 3 und das Umlaufgetriebe 6 zu der Abtriebswelle 6.

Über eine Leistungsverzweigungsstufe 8, welche hier eine Zahnradstufe darstellt, ist die Antriebswelle 2 des weiteren mit einem zweiten Getriebestrang 9 verbunden, welcher über ein ebenfalls eine Reibkupplung darstellendes Schaltelement 10 mit dem Umlaufgetriebe 6 verbindbar ist. Somit ist eine Leistungsverzweigung auf den parallel zu dem ersten Getriebestrang 3 angeordneten zweiten Getriebestrang 9 möglich, und in einem zweiten Betriebsbereich kann mit einem Leistungsfluß über den zweiten Getriebestrang 9 der erste Getriebestrang 3 mit dem stufenlosen Getriebe 4 entlastet werden kann, wodurch das CVT-Getriebe 4 wiederum einen besseren Wirkungsgrad erzielen kann.

Zudem vergrößert sich mit der Auswahl von mehreren Betriebsbereichen die Spreizung des gesamten Getriebes.

Bei dem gezeigten Mehrbereichsgetriebe 1 sind mehrere Gänge realisierbar, in denen jeweils das stufenlose Getriebe 4 eine stufenlose Verstellung der Übersetzung des gesamten Getriebes 1 bewirkt. Ein Gangwechsel erfolgt hier bevorzugt bei synchroner Drehzahl und ohne Zugkraftunterbrechung, wobei im stufenlosen Getriebe 4 eine Leistungsumkehr eintritt.

Mit Hilfe eines geeigneten elektronischen Steuergerätes, z.B. einer ohnehin vorhandenen elektronischen Getriebesteuerung, kann bei einem Wechsel zwischen den beschriebenen Betriebsbereichen eine Lastumverlagerung an den Reibkupplungen 5 und 10 im Synchronpunkt durch eine gleichzeitig zur Umschaltung der Reibkupplungen 5, 10 erfolgende Verstellung der Übersetzung des stufenlosen Getriebes 4 realisiert werden.

Die Verstellung der Übersetzung des stufenlosen Getriebes 4 erfolgt dabei in Abhängigkeit der Eigenschaften eines Variators 11 des stufenlosen Getriebes 4, vorliegend eines an sich bekannten CVT-Kegelscheibenvariators, wobei der Variator 11 so weit verstellt wird, daß das zuschaltende Schaltelement im Synchronpunkt eine zuvor berechnete Belastung erfährt, während das abschaltende Schaltelement entlastet ist. Die Berechnung der einzustellenden Belastung, d.h. welches Moment im Synchronpunkt nach Lastumverlagerung durch das zuschaltende Schaltelement übertragen werden muß, nimmt zweckmäßigerweise eine Rechnereinheit der elektronischen Getriebesteuerung vor und erfolgt in Abhängigkeit äußerer Kräfte, hier in Abhängigkeit eines über die Eingangswelle 2 auf das Mehrbereichsgetriebe 1 einwirkenden Motormoments und eines über die Abtriebswelle 7 auf das Getriebe 1 wirkenden Fahrwiderstandes, wobei letzterer ersatzweise auch durch den Abtriebsdrehzahlgradienten und die Fahrzeugmasse bestimmt werden kann. Die Berechnung der Belastung wird hier für jeden Betriebsbereich des Mehrbereichsgetriebes 1 getrennt durchgeführt.

Die an dem stufenlosen Getriebe 4 auftretenden Momente und Drehzahlen sowie dessen Übersetzung sind in dem in Fig. 2 gezeigten Modell veranschaulicht. In diesem allgemeinen Modell, welches für alle Arten von stufenlosen Getrieben gelten kann, ist mit dem Bezugszeichen 12 symbolisch die im Abtriebsstrang vor dem Variator 11 liegende Drehmasse wiedergegeben, wie sie an einer Eingangswelle 13 des Variators 11 anliegt. Der Variator 11, welcher in der Fig. 2 ebenfalls nur symbolisch angedeutet ist, umfaßt hier ein shlupfmomentübertragendes Element 14 in Form eines Wandlers, der über eine Welle 18 mit einer stufenlosen Übersetzungsverstelleinrichtung 15 verbunden ist. An einer Ausgangswelle 16 des Variators 11 ist mit dem Bezugszeichen 17 symbolisch die Ausgangsdrehmasse wiedergegeben.

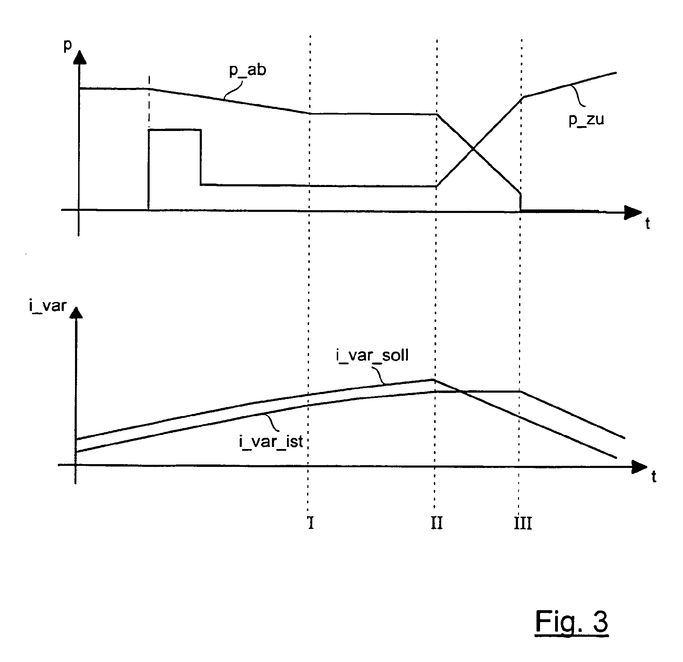

Das Modell nach Fig. 2 verdeutlicht den momentabhängigen Unterschied zwischen einer Soll-Übersetzung i_var_soll des Variators 11 und einer Ist-Übersetzung i_var_ist, welcher auch dem Diagramm in Fig. 3 zu entnehmen ist.

Die Soll-Übersetzung i_var_soll und Ist-Übersetzung i_var_ist des Variators 11 sind nur im unbelasteten Zustand identisch. Dadurch, daß ein Moment nur durch Schlupf übertragen werden kann, treten Drehzahl- und damit Übersetzungsabweichungen auf.

Im belasteten Zustand, wenn ein Moment in dem Wandler 14 erzeugt wird, ergibt sich eine Differenz zwischen der Soll-Übersetzung i_var_soll und der Ist-Übersetzung i_var_ist, wobei die Ist-Übersetzung i_var_ist dem Verhältnis der Eingangsdrehzahl ω_in an der Eingangswelle 13 des Variators 11 zur Ausgangsdrehzahl ω_out an der Ausgangswelle 16 des Variators 11 entspricht.

Durch die Vorgabe der Soll-Übersetzung i_var_soll und die entsprechende Verstellung der Übersetzungsverstelleinrichtung 15 wird eine Differenzdrehzahl zwischen einer Drehzahl ω_z der den Wandler 14 und die Übersetzungsverstelleinrichtung 15 verbindenden Welle 18 und der Eingangsdrehzahl ω_in der Eingangswelle 13 erzeugt. Das am Eingang des Variators 11 anliegende Moment T_var_in, welches von den Drehzahlen ω_z, ω_in abhängig ist, ergibt als Produkt mit der Soll-Übersetzung i_var_soll das Ausgangsmoment T_var_out des Variators 11.

Bei der Bereichsumschaltung im Synchronpunkt hängen die Belastungsmomente der beteiligten Schaltelemente 5, 10 von den äußeren Momenten wie Motormoment und Fahrwiderstand sowie von der Vorgabe der Soll-Übersetzung i_var_soll des Variators 11, ab. Die Lastumverlagerung an den Schaltelementen 5 und 10 kann somit durch die Verstellung des Variators 11 herbeigeführt werden.

Da die Größe der Verstellung von den Eigenschaften des Variators abhängig ist, wird vorliegend in Versuchen ermittelt, welches Übertragungsmoment sich bei einer bestimmten Variatorverstellung ergibt. Die so in Abhängigkeit einer bestimmten Variatorverstellung ermittelte Übertragungsfähigkeit der Schaltelemente 5, 10 stellt eine empirische Größe zur Bestimmung der Eigenschaften des Variators dar, welche in eine Vorsteuerung der Übersetzungsverstellung des Variators 11 einfließen und bei der Verstellung des Variators 11 zur Bereichsumschaltung berücksichtigt werden.

Die Vorsteuerung der Übersetzungsverstellung dient dazu, den Regelfehler klein zu halten und die Dynamik zu verbessern, und ist vorliegend Teil einer Variator-Übersetzungsregelung, welche hierzu geeignete Steuermittel aufweist. In bekannter Weise kann die Vorsteuerung der Übersetzungsverstellung bei dem hier gezeigten CVT-Getriebe 4 ein Kennfeld für die Soll-Druckverhältnisse an den beiden Scheibensätzen des Variators in Abhängigkeit von Übersetzung und Belastungsmoment umfassen.

Diese Vorsteuerung kann zur Verringerung von Abweichungen zudem die Abhängigkeit der Variatorübersetzung von aktuellen Betriebszustandsgrößen wie z.B. dem übertragenen Moment, der aktuellen Variatorübersetzung, Drehzahlen, Temperatur, etc. berücksichtigen.

Der Variator 11 wird nun so eingestellt, daß das zuschaltende Schaltelement genau so wie berechnet belastet wird, während das abschaltende Schaltelement gleichzeitig entlastet ist. Abhängig von Motormoment und Fahrwiderstand ergibt sich für den Umschaltpunkt ein unterschiedliches Variatorbelastungsmoment für die beiden Übersetzungsbereiche. Während einer Lastübernahme bei den beteiligten Schaltelementen 5 und 10 wird das aktuelle Belastungsmoment des Variators durch die Übersetzungsverstellung auf einen berechneten Zielwert im neuen Fahrbereich gebracht.

Bei dem hier gezeigten Mehrbereichsgetriebe 1 ist vorgesehen, daß das Verstellen des Variators 11 und der Schaltelemente 5, 10 nur dann gleichzeitig durchgeführt wird, wenn das dynamische Verhalten bezüglich der Variatorverstellung und der Kupplungsverstellung ähnlich ist. Unter dem dynamischen Verhalten wird hier der zeitliche Zusammenhang zwischen der Vorgabe einer Übersetzung und der Reaktion darauf verstanden, welcher beispielsweise durch die Trägheit von elektrischen Stellelementen beeinflußt wird. Die Dynamik von Variator und Schaltelementen wird dann als ähnlich bezeichnet, wenn eine Zeitkonstante der Variatorverstellung und eine Zeitkonstante der Schaltelementverstellung innerhalb eines bestimmten vorgebbaren Bereiches liegen.

Falls ein zu verstellendes Element, sei es der Variator 11 oder eines der Schaltelemente 5 oder 10, langsamer ist als die anderen Elemente, werden alle Elemente gleich langsam ausgeführt bzw. das entsprechend schnellere Element verzögert.

Bezug nehmend auf die Fig. 3 ist das Verhalten der Druckverläufe der Schaltelemente 5 und 10 sowie der Übersetzung i_var des Variators 11 während einer Bereichsumschaltung veranschaulicht, wobei mit p_zu der Druckverlauf bei der Ansteuerung einer zuschaltenden Reibkupplung und mit p_ab der Druckverlauf einer abschaltenden Reibkupplung über der Zeit t wiedergegeben ist. Dabei ist ersichtlich, daß in einem zeitlich nahen Bereich vor dem Zeitpunkt I der Einleitung der Bereichsumschaltung das zuschaltende Schaltelement vorbefüllt sein muß, wenn dieses eine hydraulische Kupplung darstellt, um eine schnelle Reaktion auf eine Schaltungsanforderung zu gewährleisten. Zu diesem Zweck wird der Druck p_zu der zuschaltenden Kupplung kurzzeitig hochgefahren.

Im Synchronpunkt II wird gleichzeitig die Variatorverstellung durch Änderung der Vorgabe der Soll-Übersetzung i_var_soll, das Abschalten des abzuschaltenden Schaltelementes durch Absenkung des zugehörigen Druckes p_zu und das Zuschalten des neuen Schaltelementes durch Hochfahren von dessen Ansteuerdruck p_zu durchgeführt. Die jeweilige Vorgabe kann gegebenenfalls schon früher erfolgen, so daß Reaktion bei unterschiedlichem Verzögerungsverhalten der beteiligten Elemente zeitgleich erfolgt.

Nach der Lastumverlagerung, welche zu einem Zeitpunkt III beendet ist, wird das neue Schaltelement geschlossen, um ein Durchrutschen zuverlässig zu verhindern.

Während des Zeitraums der Bereichswechselschaltung ist bei der vorliegenden Ausführung des Mehrbereichsgetriebes 1 eine übergeordnete Motordrehzahlregelung deaktiviert, da während der Bereichsumschaltung die Gesamtübersetzung konstant bleibt. Der Zeitpunkt des Einfrierens der übergeordneten Motordrehzahlregelung wird in Abhängigkeit des aktuellen Verstellgradienten und des Zeitverhaltens der Variatorregelung gewählt und stellt somit gleichsam den Startpunkt I der Bereichswechselschaltung dar. In anderen Worten wird die Motordrehzahlregelung eingefroren, wenn die zugeordnete Rechnereinheit aufgrund der fortlaufenden Berechnungen erkennt, daß die Differenzdrehzahl bei dem zuschaltenden Schaltelement gegen Null läuft und der Variator 11 mit seinem bekannten dynamischen Verhalten seine Verstellung so beendet, daß das Schaltelement bei der gegebenen Trägheit des Systems noch den Synchronpunkt erreicht. Dies führt dazu, daß der Variator aufgrund der Trägheit seiner Verstelleinrichtung gedämpft in den Synchronpunkt läuft.

Alternativ besteht die Möglichkeit, den übergeordneten Regelkreis bzw. mit der übergeordneten Motordrehzahlregelung verbundenen Regler für das stufenlose Getriebe 4 während der Bereichswechselschaltung stufenlos in seiner Wirkung zu invertieren. Die Invertierung kann dabei durch eine Multiplikation des Reglerausgangs mit einer Größe folgen, deren Wert sich innerhalb des Zeitraums der Bereichsumschaltung von "+1" nach "-1" oder umgekehrt stufenlos über der Zeit ändert.

Zum Zeitpunkt III des Endes der Bereichswechselschaltung muß der übergeordnete Regelkreis stoßfrei aufgeschaltet werden, indem z.B. die Summe der Regelanteile bei der aktuellen Regeldifferenz zu Null gesetzt wird.

### Bezugszeichen

- 1: Mehrbereichsgetriebe
- 2: Antriebswelle
- 3: erster Getriebestrang
- 4: stufenloses Getriebe
- 5: reibschlüssiges Schaltelement, Reibkupplung
- 6: Zahnräder-Planetengetriebe, Umlaufgetriebe
- 7: Abtriebswelle
- 8: Zahnrad-Übersetzungsstufe
- 9: zweiter Getriebestrang
- 10: reibschlüssiges Schaltelement, Reibkupplung
- 11: Variator
- 12: Drehmasse
- 13: Eingangswelle des Variators
- 14: schlupfmomentübertragendes Element, Wandler
- 15: Übersetzungsverstelleinrichtung
- 16: Variatorausgangswelle
- 17: Drehmasse
- 18: Welle

- ω_in: Drehzahl der Variatoreingangswelle
- ω_z: Variatordrehzahl
- ω_out: Drehzahl der Variatorausgangswelle
- i_var: Variatorübersetzung
- i_var_ist: Ist-Übersetzung des Variators
- i_var_soll: Soll-Übersetzung des Variators
- p_ab: Druckverlauf des abschaltenden Schaltelementes
- p_zu: Druckverlauf des zuschaltenden Schaltelementes
- t: Zeit
- T_var_in: Variatoreingangsmoment
- T_var_out: Variatorausgangsmoment

## Patentansprüche

1. Mehrbereichsgetriebe für ein Kraftfahrzeug, umfassend wenigstens eine Leistungsverzweigungsstufe (8) und wenigstens eine Leistungssummierungsstufe (6) und wenigstens zwei zwischen diesen parallel zueinander angeordnete Getriebestränge (3, 9) mit jeweils mindestens einem Schaltelement (5, 10), wobei in einem der Getriebestränge (3) ein stufenloses Getriebe (4) angeordnet ist, mittels dessen eine stufenlose Verstellung der Übersetzung des gesamten Getriebes (1) in einer jeweiligen Gangstufe realisierbar ist, wobei ein Gangwechsel ohne Zugkraftunterbrechung und mit einer Leistungsumkehr im stufenlosen Getriebe (4) erfolgt und daß bei einem Bereichswechsel eine Lastumverlagerung an wenigstens einem reibschlüssig ausgebildeten Schaltelement (5, 10) durch eine gleichzeitig zur Umschaltung der Schaltelemente (5, 10) durchgeführte Verstellung der Übersetzung des stufenlosen Getriebes (4) erfolgt, **dadurch gekennzeichnet, daß** die Verstellung der Übersetzung des stufenlosen Getriebes (4) während der Umschaltung der Schaltelemente (5, 10) in Abhängigkeit der Eigenschaften eines Variators (11) derart erfolgt, daß das zuschaltende Schaltelement (5 oder 10) im Synchronpunkt eine berechnete Belastung erfährt, während das abschaltende Schaltelement (10 oder 5) entlastet ist.

2. Mehrbereichsgetriebe nach Anspruch 1, **dadurch gekennzeichnet, daß** die während einer Lastumverlagerung bei den beteiligten Schaltelementen (5, 10) erfolgende Verstellung der Übersetzung des stufenlosen Getriebes (4) derart erfolgt, daß das aktuelle Belastungsmoment des Variators (11) zu einem berechneten Zielpunkt im neuen Fahrbereich verändert wird.

3. Mehrbereichsgetriebe nach Anspruch 1 oder 2, **dadurch gekennzeichnet, daß** die einzustellende Belastung des im Synchronpunkt zuschaltenden Schaltelements (5 oder 10) in Abhängigkeit äußerer Kräfte berechnet wird.

4. Mehrbereichsgetriebe nach Anspruch 3, **dadurch gekennzeichnet, daß** als äußere Kräfte ein Motormoment und ein Fahrwiderstand in die Berechnung der einzustellenden Belastung des im Synchronpunkt zuschaltenden Schaltelements (5 oder 10) eingehen.

5. Mehrbereichsgetriebe nach einem der Ansprüche 1 bis 4, **dadurch gekennzeichnet, daß** die in Abhängigkeit einer bestimmten Variatorverstellung erzielte Übertragungsfähigkeit der Schaltelemente (5, 10) eine empirische Größe zur Ermittlung der Eigenschaften des Variators (11) darstellt.

6. Mehrbereichsgetriebe nach einem der Ansprüche 1 bis 5, **dadurch gekennzeichnet, daß** eine Variator-Übersetzungsregelung Mittel zur Vorsteuerung der Übersetzungsverstellung aufweist.

7. Mehrbereichsgetriebe nach Anspruch 6, **dadurch gekennzeichnet, daß** die Vorsteuerung der Übersetzungsverstellung des Variators (11) in Abhängigkeit aktueller Betriebszustandsgrößen des Getriebes (1) erfolgt.

8. Mehrbereichsgetriebe nach einem der Ansprüche 1 bis 7, **dadurch gekennzeichnet, daß** das Verstellen der Übersetzung des stufenlosen Getriebes (4) und der Schaltelemente (5, 10) gleichzeitig durchgeführt wird, wenn das dynamische Verhalten von Variatorverstellung und Schaltelementverstellung wenigstens ähnlich ist.

9. Mehrbereichsgetriebe nach einem der Ansprüche 1 bis 8, **dadurch gekennzeichnet, daß** ein mit einer übergeordneten Motordrehzahlregelung verbundener Regler für das stufenlose Getriebe (4) während des Zeitraums der Bereichswechselschaltung deaktiviert ist.

10. Mehrbereichsgetriebe nach einem der Ansprüche 1 bis 8, **dadurch gekennzeichnet, daß** ein mit einer übergeordneten Motordrehzahlregelung verbundener Regler für das stufenlose Getriebe (4) während des Zeitraums der Bereichswechselschaltung stufenlos in seiner Wirkung invertiert wird.

11. Mehrbereichsgetriebe nach Anspruch 10, **dadurch gekennzeichnet, daß** die Invertierung durch eine Multiplikation des Reglerausgangs mit einer Größe erfolgt, die sich innerhalb des Zeitraums der Bereichswechselschaltung von "+1" nach "-1" oder umgekehrt verändert.

12. Mehrbereichsgetriebe nach einem der Ansprüche 1 bis 11, **dadurch gekennzeichnet, daß** das stufenlose Getriebe (4) ein CVT-Getriebe, ein Reibradgetriebe oder ein hydrostatisches Getriebe darstellt.

## Claims

1. Auxiliary-range transmission for a motor vehicle, comprising at least one power-splitting stage (8) and at least one power-combining stage (6) and at least two transmission lines (3, 9) arranged therebetween parallel to each other and each having at least one shifting element (5, 10), there being arranged in one of the transmission lines (3) a stepless transmission (4) by means of which can be implemented a continuous adjustment of the ratio of the whole transmission (1) at a respective gear step, a gear change taking place without interruption of tractive force and with a power reversal in the stepless transmission (4), and upon a range change a load transfer taking place at at least one frictionally designed shifting element (5, 10) by an adjustment of the ratio of the stepless transmission (4) carried out simultaneously with the shifting of the shifting elements (5, 10), **characterised in that** the adjustment of the ratio of the stepless transmission (4) during the shifting of the shifting elements (5, 10) takes place in dependence on the properties of a variator (11) in a manner such that the shifting element (5 or 10) being engaged is subjected at the synchronisation point to a calculated load, while the shifting element (10 or 5) being disengaged is unloaded.

2. Auxiliary-range transmission according to Claim 1, **characterised in that** the adjustment of the ratio of the stepless transmission (4) taking place during a load transfer in the shifting elements (5, 10) involved takes place in a manner such that the current load torque of the variator (11) is changed to a calculated target point in the new driving range.

3. Auxiliary-range transmission according to Claim 1 or 2, **characterised in that** the load to be set of the shifting element (5 or 10) being engaged at the synchronisation point is calculated in dependence on external forces.

4. Auxiliary-range transmission according to Claim 3, **characterised in that** an engine torque and a tractive resistance are included as external forces in the calculation of the load to be set of the shifting element (5 or 10) being engaged at the synchronisation point.

5. Auxiliary-range transmission according to one of Claims 1 to 4, **characterised in that** the transmission capacity of the shifting elements (5, 10) achieved in dependence on a specific variator adjustment constitutes an empirical quantity for determining the properties of the variator (11).

6. Auxiliary-range transmission according to one of Claims 1 to 5, **characterised in that** a variator ratio regulation system has means for precontrolling the ratio adjustment.

7. Auxiliary-range transmission according to Claim 6, **characterised in that** the ratio adjustment of the variator (11) is precontrolled in dependence on current operating state quantities of the transmission (1).

8. Auxiliary-range transmission according to one of Claims 1 to 7, **characterised in that** the adjustment of the ratio of the stepless transmission (4) and of the shifting elements (5, 10) is carried out simultaneously when the dynamic behaviour of variator adjustment and shifting element adjustment is at least similar.

9. Auxiliary-range transmission according to one of Claims 1 to 8, **characterised in that** a regulator, connected to a priority engine rotational speed regulation system, for the stepless transmission (4) is deactivated during the period of time of the range change.

10. Auxiliary-range transmission according to one of Claims 1 to 8, **characterised in that** a regulator, connected to a priority engine rotational speed regulation system, for the stepless transmission (4) is continuously inverted in its action during the period of time of the range change.

11. Auxiliary-range transmission according to Claim 10, **characterised in that** the inversion results from a multiplication of the regulator output by a quantity which changes within the period of time of range change from "+1" to "-1" or vice versa.

12. Auxiliary range transmission according to one of Claims 1 to 11, **characterised in that** the stepless transmission (4) is a CVT transmission, a friction transmission or a hydrostatic transmission.

## Revendications

1. Transmission à gammes multiples pour un véhicule automobile comprenant au moins un étage de ramification de la puissance (8) et au moins un étage de réunion de la puissance (6), et au moins deux chaînes cinématiques (3, 9) agencées parallèlement entre elles entre ces deux étages, qui comprennent chacune au moins un élément de commande (5, 10), transmission dans laquelle, dans une des chaînes cinématiques (3), est agencée une transmission à variation continue (4) au moyen de laquelle il est possible de réaliser un ajustement sans palier du rapport de l'ensemble de la transmission (1), dans un étage de vitesse considéré, dans laquelle un changement de vitesse se produit sans interruption de la force de traction et avec inversion de l'action dans la transmission à variation continue (4) et dans laquelle, au moment d'un changement de gamme, une inversion de charge se produit sur au moins un élément de commande (5, 10) du type opérant par friction, sous l'effet d'un ajustement du rapport de la transmission à variation continue (4) qui est exécuté simultanément avec la commutation des éléments de commande (5, 10), **caractérisée en ce que** l'ajustement du rapport de la transmission à variation continue (4) pendant la commutation des éléments de commande (5, 10) s'effectue en fonction des propriétés d'un variateur (11) de telle manière que l'élément de commande (5 ou 10) qui se ferme subit une charge calculée au point synchrone, tandis que l'élément de commande (10 ou 5) qui s'ouvre est déchargé.

2. Transmission à gammes multiples selon la revendication 1, **caractérisée en ce que** l'ajustement du rapport de la transmission à variation continue (4) qui se produit pendant un transfert de la charge dans les éléments de commande (5, 10) qui interviennent se produit de telle manière que le couple de charge actuel du variateur (11) est amené à un point cible calculé dans la nouvelle gamme de marche.

3. Transmission à gammes multiples selon la revendication 1 ou 2, **caractérisée en ce que** la charge à établir pour l'élément de commande (5 ou 10) qui se ferme au point synchrone est calculée en fonction de forces extérieures.

4. Transmission à gammes multiples selon la revendication 3, **caractérisée en ce que**, comme forces extérieures, un couple moteur et une résistance au roulement interviennent dans le calcul de la charge de l'élément de commande (5 ou 10) qui se ferme au point synchrone.

5. Transmission à gammes multiples selon l'une des revendications 1 à 4, **caractérisée en ce que** la capacité de transmission des éléments de commande (5, 10) qui est obtenue en fonction d'un ajustement donné du variateur représente une grandeur empirique, pour la détermination des propriétés du variateur (11).

6. Transmission à gammes multiples selon l'une des revendications 1 à 5, **caractérisée en ce qu'**une régulation du rapport du variateur comprend des moyens pour le pilotage du réglage du rapport.

7. Transmission à gammes multiples selon la revendication 6, **caractérisée en ce que** le pilotage du réglage du rapport du variateur (11) s'effectue en fonction de grandeurs d'état de fonctionnement actuelles de la transmission (1).

8. Transmission à gammes multiples selon l'une des revendications 1 à 7, **caractérisée en ce que** l'ajustement du rapport de la transmission à variation continue (4) et la commande des éléments de commande (5, 10) sont exécutés simultanément lorsque le comportement dynamique du réglage du variateur et celui de la commande des éléments de commande sont au moins analogues.

9. Transmission à gammes multiples selon l'une des revendications 1 à 8, **caractérisée en ce qu'**un régulateur pour la transmission à variation continue (4) qui est relié à une régulation de la vitesse de rotation du moteur qui est de rang supérieur, est désactivé pendant le laps de temps de la commutation du changement de gamme.

10. Transmission à gammes multiples selon l'une des revendications 1 à 8, **caractérisée en ce qu'**un régulateur pour la transmission à variation continue (4) qui est relié à une régulation de la vitesse de rotation du moteur, qui est de rang supérieur, est inversé sans palier dans son effet pendant le laps de temps de la commutation du changement de gamme.

11. Transmission à gammes multiples selon la revendication 10, carac-térisée en ce que l'inversion s'effectue par une multiplication de la sortie du régulateur par une grandeur qui varie de "+1" à "-1" ou inversement dans le laps de temps de la commutation du changement de gamme.

12. Transmission à gammes multiples selon l'une des revendications 1 à 11, **caractérisée en ce que** la transmission à variation continue (4) représente une transmission CVT, un mécanisme à roues de friction ou un mécanisme hydrostatique.
